# EUROPÄISCHE PATENTSCHRIFT

(11) **EP 2 719 564 B1**
(45) Veröffentlichungstag und Bekanntmachung des Hinweises auf die Patenterteilung: **24.08.2016**
(21) Anmeldenummer: 12185476.4
(22) Anmeldetag: 21.09.2012
(51) Int. Cl.: H01M 2/10, B60L 11/18, H01M 10/6555

(54) **Batteriesystem für ein Kraftfahrzeug**
Battery system for a motor vehicle
Système de batterie pour véhicule automobile

(43) Veröffentlichungstag der Anmeldung: 16.04.2014
(73) Patentinhaber: Samsung SDI Co., Ltd., Yongin-si, Gyeonggi-do (KR)
(72) Erfinder: Fabian, Harald, 8510 Stainz (AT); Kojc, Miran, 2000 Maribor (SI); Pucher, Matthias, 8052 Graz (AT); Steiner, Franz, 8020 Graz (AT); Wünsche, Ralph, 8010 Graz (AT)
(74) Vertreter: Gulde & Partner

(56) Entgegenhaltungen:
- DE-A1-102009 043 635
- DE-A1-102010 020 065
- US-A- 4 317 497
- US-A1- 2011 143 179
- US-B1- 6 189 635

## Beschreibung

### Gebiet der Erfindung

Die vorliegende Erfindung betrifft Batteriebefestigungssysteme, im Besonderen Systeme zur Verwendung einer unterbrechungsfreien Stromversorgung mit einer Vielzahl von Batteriemodulen.

### Stand der Technik

Üblich verwendete Batteriegehäuse bestehen aus einem Oberteil und einem Unterteil und sind meist aus einem nicht leitenden Material hergestellt, in der Regel ist dies Kunststoff. Die Batteriezellen sind innerhalb des Batteriegehäuses angeordnet. Das Oberteil wird auf dem Unterteil befestigt, um einen im Wesentlichen rechteckigen Behälter zu bilden.

Zur Verwendung solcher Batteriesysteme ist es im Allgemeinen wünschenswert eine Batteriebefestigung im Batteriegehäuse vorzusehen.

Die DE 10 2009 043635 A1 sowie die US 2011/143179 A1 offenbaren jeweils ein Batteriesystem für ein Kraftfahrzeug mit einem ersten Gehäusebauteil, wobei im ersten Gehäusebauteil über Zellhalter Zellen befestigbar sind.

US6197444B1 zeigt ein Batteriegehäuse, ein Paar Gehäuseelemente umfassend, welche miteinander verbunden sind, um ein Gehäuse für zumindest eine Batterie zu bilden. Jedes Gehäuseelement weist ein Paar nicht paralleler Seitenwände auf. Jede Seitenwand der Gehäuseelemente ist angepasst, um als unterste Bodenwand positioniert zu werden. Ein Paar querverlaufender Stirnwände verbindet die Seitenwände, um eine Öffnung zu definieren, in welcher zumindest ein Abschnitt einer Batterie angeordnet ist.

Es wird jedoch nicht erwähnt, wie die Befestigung der Batteriezellen in den Gehäuseelementen erfolgt.

Ein Batteriebefestigungssystem ist aus der US8110300B2 bekannt. Bei diesem System umfasst ein Batteriebehälter eine Basis, eine Halterungswand und eine Befestigungswand. Der Batteriebehälter weist eine Länge auf, die zur Aufnahme einer Vielzahl von Batteriemodulen geeignet ist. Die Halterungswand weist eine Halterung auf, welche sich zumindest teilweise entlang einer Länge des Behälters erstreckt. Die Befestigungswand weist eine Befestigungsstruktur auf, welche sich zumindest teilweise entlang einer Länge des Behälters erstreckt, auf. Die Halterung ist so ausgelegt um in eine erste Haltefläche einzugreifen, welche jedem der Vielzahl von Batteriemodulen zugeordnet ist. Die Befestigungsstruktur umfasst eine Vielzahl von beabstandeten Bohrungen, welche in einem erhöhten Abschnitt der Befestigungsstruktur angeordnet sind. Der erhöhte Abschnitt umfasst eine Vielzahl von erhöhten Ausnehmungen, die Bohrungen sind den Ausnehmungen zugeordnet.

Nachteilig bei dieser Ausführung ist, dass die Anbindung des Batteriesystems an einer Grundplatte erfolgt. Wird das Batteriesystem bei einem Unfall oberhalb der Grundplatte belastet, ist das Risiko für eine Beschädigung des Batteriesystems hoch.

Aus der US 4,317,497 ist ein Batteriebefestigungssystem für ein Kraftfahrzeug bekannt, welches ein Gehäusebauteil mit einer höher und eine niedriger ausgeführten gegenüberliegenden Gehäusewand beschreibt, wobei beide Seitenwände einen rechten Winkel mit der Grundfläche bilden.

### Zusammenfassung der Erfindung

Es ist eine Aufgabe der Erfindung, ein Batteriebefestigungskonzept vorzuschlagen, bei welchem das Risiko einer Beschädigung des Batteriesystems minimiert wird ohne die Abmessungen des Batteriesystems stark zu vergrößern.

Die Lösung der Aufgabe erfolgt durch ein Batteriesystem für ein Kraftfahrzeug nach Anspruch 1.

Erfindungsgemäß bilden die erste Seitenwand und die Grundfläche des ersten Gehäusebauteils einen im Wesentlichen rechten Winkel. Erfindungsgemäß bilden die zweite Seitenwand und die Grundfläche einen Winkel größer als 90°. Besonders bevorzugt ist es, wenn die zweite Seitenwand und die Grundfläche einen Winkel zwischen 95° und 105° einschließen.

Durch die im Vergleich zur ersten Seitenwand geringere Höhe der zweiten Seitenwand vergrößert der verhältnismäßig große Winkel zwischen der zweiten Seitenwand und der Grundfläche die Abmessungen des Batteriesystems nur geringfügig.

Erfindungsgemäß kann ein Zellhalter durch Verschrauben mit dem ersten Gehäusebauteil verbunden werden. Das hat den Vorteil, dass die Verbindung beispielsweise für das Recycling des Batteriesystems wieder gelöst werden kann. Der Zellhalter kann hierbei beispielsweise ein Kühlkörper sein. Auf dem Zellhalter ist zumindest eine Zelle angeordnet. Die Zellen können beispielsweise durch Kleben mit dem Zellhalter verbunden sein. Alternativ kann ein Hilfsrahmen mit dem ersten Gehäusebauteil verschraubt werden. Das Verschrauben bietet einen weiteren Vorteil, da eine steife Verbindung geschaffen wird, welche bei einem möglichen Auffahrunfall die auftretenden Beschleunigungs- bzw. Verzögerungskräfte sicher aufnimmt und vom ersten Gehäusebauteil zumindest teilweise in den Zellhalter oder in den Hilfsrahmen leitet, der in weiterer Folge die Kräfte auf das erste Gehäusebauteil leitet. Dadurch wird das Risiko einer Beschädigung von Batteriezellen minimiert.
Die Schraubstellen können um ein annähernd dichtes Gehäuse zu bilden, mit entsprechenden Abdichtungen versehen werden.
Alternativ zum Verschrauben, kann jede dem Fachmann bekannte Verbindung angewendet werden. Dies kann beispielsweise auch Kleben oder Schweißen umfassen.

Weiterbildungen der Erfindung sind in den abhängigen Ansprüchen, der Beschreibung sowie den beigefügten Zeichnungen angegeben.

Gemäß einer Ausführungsform der Erfindung ist das erste Gehäusebauteil als Gussteil ausgeführt.
Dabei können dünnwandige komplexe Bauteilgeometrien bei hoher Maßhaltigkeit hergestellt werden die gleichzeitig sehr gute Festigkeitswerte erreichen.

Gemäß einer weiteren Ausführungsform ist das zweite Gehäusebauteil ein Tiefziehteil.
Tiefziehteile haben den Vorteil, dass Bauteile mit sehr geringer Wandstärke hergestellt werden können, wodurch eine Gewichtseinsparung erreicht wird.

Die Gehäusebauteile, können je nach Erfordernis aus einem metallischen Werkstoff oder aus Kunststoff hergestellt werden. Es ist denkbar, dass dabei für das erste Gehäusebauteil und das zweite Gehäusebauteil unterschiedliche Werkstoffe verwendet werden.

Erfindungsgemäß sind die beiden Gehäusebauteile verbindbar. Die Geometrie der beiden Gehäusebauteile wird dabei entsprechend der Verbindungstechnik angepasst. Es ist jede dem Fachmann bekannte Art und Weise zur Verbindung zweier Gehäusebauteile denkbar, wie beispielsweise Verschrauben, Schweißen, Löten oder Kleben, wobei an den Schnittstellen der beiden Gehäusebauteile Dichtungen vorgesehen werden können, und die Gehäusebauteile werden entsprechend der Anforderungen der unterschiedlichen Verbindungstechniken angepasst. Beispielsweise können die beiden Gehäusebauteile einen umlaufenden Flansch aufweisen, welcher zu Verbindung beider Gehäusebauteile entsprechend ausgebildet sein kann.

Vorzugsweise dienen die Gehäusebauteile zur Aufnahme zumindest einer Zelle, wobei die Zelle an einem Zellhalter oder alternativ an einem Hilfsrahmen befestigt ist.
Der Vorteil ist, dass die Zellen fertig montiert im ersten Gehäusebauteil untergebracht sind, und eine Montage aller weiteren Bauteile des Batteriesystems, wie Elektronikkomponenten, Kühlkomponenten, aber auch die Modulverbindungen vorab fertiggestellt werden können, und das zweite Gehäusebauteil zur Komplettierung nur noch mit dem ersten Gehäusebauteil verbunden werden muss.

Die Erfindung ist nicht auf den Automobilbau eingeschränkt, sondern kann auch im Non-Automotive Bereich, beispielsweise im Schiffsbau oder Schienenverkehr, aber auch für stationäre Anwendungen wie z.B. im Anlagenbau angewendet werden.

### Kurzbeschreibung der Zeichnungen

Die Erfindung wird im Folgenden beispielhaft unter Bezugnahme auf die Zeichnungen beschrieben.
- Fig. 1: zeigt zwei Ansichten eines Batteriegehäuses, einmal den Stand der Technik sowie eine erfindungsgemäße Lösung.
- Fig. 2: zeigt schematisch eine Seitenansicht eines ersten Gehäusebauteils.
- Fig. 3: zeigt zwei Schnittdarstellungen in der Seitenansicht eines Befestigungskonzeptes eines ersten Gehäusebauteils und einem Zellhalter.
- Fig. 4: zeigt schematisch die Ansicht eines Hilfrahmens
- Fig. 5: zeigt schematisch eine Seitenansicht eines ersten Gehäusebauteils mit einem Hilfsrahmen

### Detaillierte Beschreibung der Erfindung

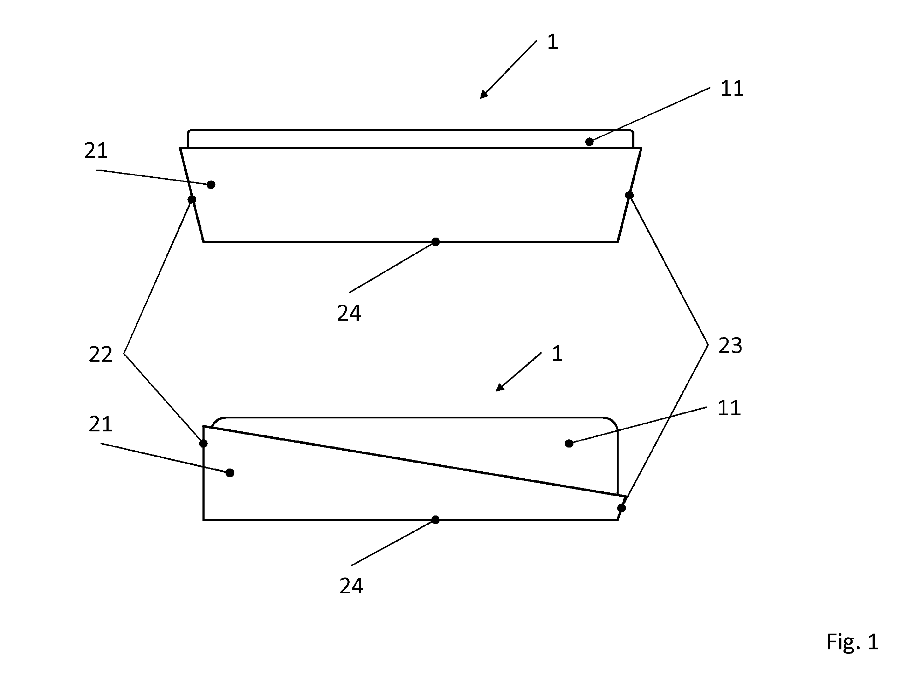

In Fig. 1 wird in der oberen Ansicht ein Batteriesystem 1 in einer Seitenansicht dargestellt, wie es dem Stand der Technik entspricht. Das erste Gehäusebauteil 21 weist an beiden Seitenflächen 22, 23 Formungsschrägen auf wie sie bei Gusswerkstücken zum Entformen erforderlich sind. Das zweite Gehäusebauteil 11, in der Regel eine Abdeckung wird mit dem ersten Gehäusebauteil 21 in geeigneter Weise verbunden.
In der unteren Ansicht der Fig. 1 wird in einer Seitenansicht eine erfindungsgemäße Ausführung eines Batteriesystems 1 dargestellt. Eine erste Seitenwand 22 bildet mit einer Grundfläche 24 des ersten Gehäusebauteils 21 einen annähernd rechten Winkel und ist höher ausgebildet als die zweite Seitenwand 23. Die zweite Seitenwand 23 weist eine Schräge M (nicht dargestellt) auf. Das zweite Gehäusebauteil 11 ist vorzugsweise durch Tiefziehen hergestellt und wird mit dem ersten Gehäusebauteil mechanisch verbunden.

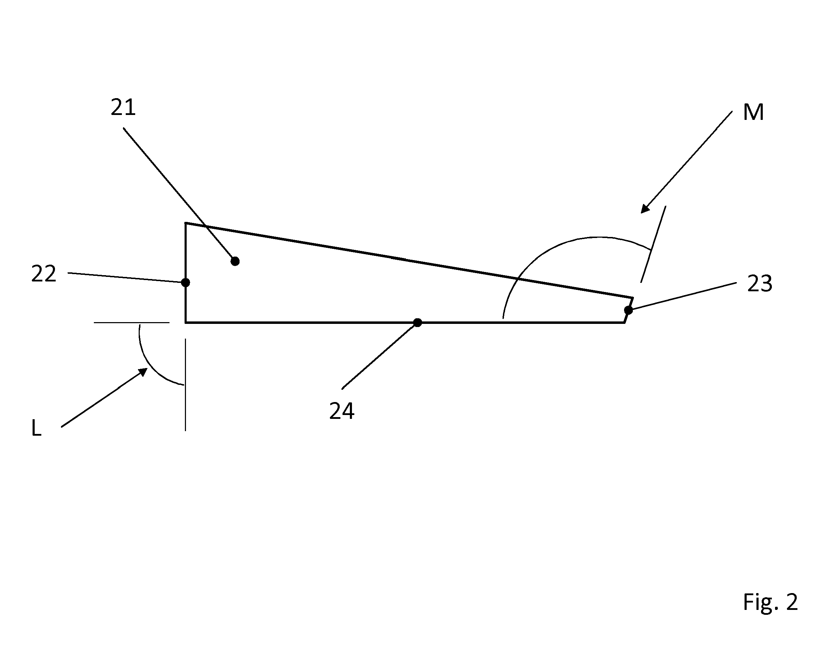

Eine Seitenansicht des ersten Gehäusebauteils 21 wird in Fig. 2 dargestellt. Das erste Gehäusebauteil 21 ist dabei bevorzugt in einem Gussverfahren hergestellt. Aufgrund des annähernd rechten Winkels L zwischen der ersten Seitenwand 22 und der Grundfläche 24 des Gehäusebauteils 21 ist es erforderlich, dass die zweite Seitenwand 23 eine Schräge M aufweist. Da die zweite Seitenwand 23 eine wesentlich geringere Höhe als die erste Seitenwand 22 aufweist, wirkt sich die geometrische Änderung in Bezug auf die Abmessungen des Batteriesystems nicht sonderlich aus, wodurch gegenüber dem Stand der Technik ein wesentlich geringerer Bauraumbedarf gegeben ist.

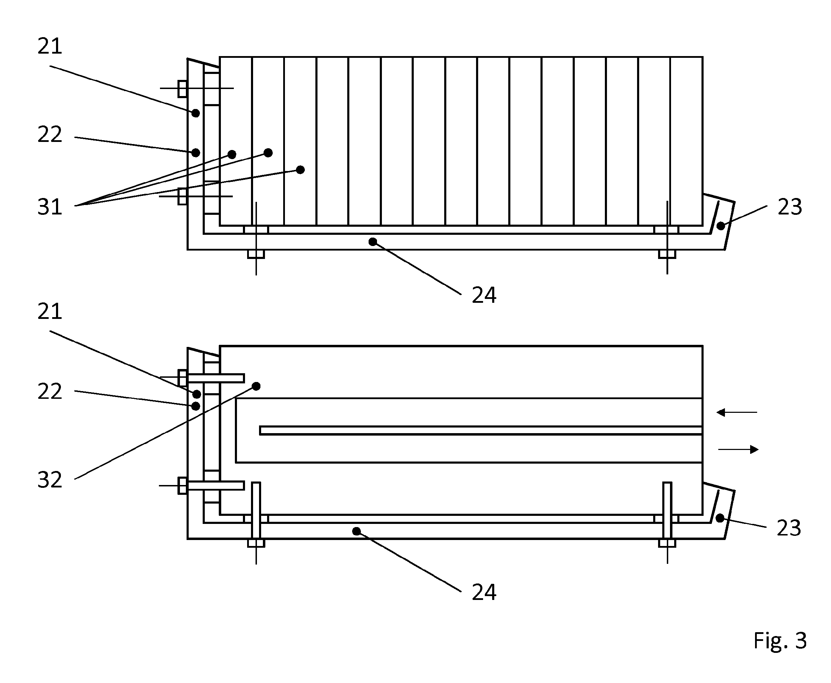

In Fig. 3 sind zwei Schnittdarstellungen in einer Seitenansicht des erfindungsgemäßen Batteriesystems 1 dargestellt. In den beiden Darstellungen wird ein Befestigungskonzept durch Verschrauben gezeigt. In der oberen Darstellung weist ein Zellhalter 32 (nicht dargestellt) eine Vielzahl von Zellen 31 auf, welche mit dem Zellhalter 32 beispielsweise durch Kleben verbunden sind. Der Zellhalter 32 ist mit der ersten Seitenwand 22 und der Grundfläche 24 des ersten Gehäusebauteils 21 mittels Schrauben verbunden. Die Verschraubungen werden, falls erforderlich, abgedichtet, um ein Entweichen eines eventuell aus den Zellen 31 austretendes Gas aus dem Batteriesystem 1 zu verhindern.
In der unteren Ansicht ist der Zellhalter 32 als Kühlkörper ausgebildet. Im Schnitt ist ein Kühlkanal für ein gasförmiges oder flüssiges Kühlmedium dargestellt. Zwei Pfeile zeigen die Einlass- bzw. die Auslassrichtung des Kühlmediums. Der Zellhalter 32 ist mit der ersten Seitenwand 22 und der Grundfläche 24 des ersten Gehäusebauteils 21 verschraubt.

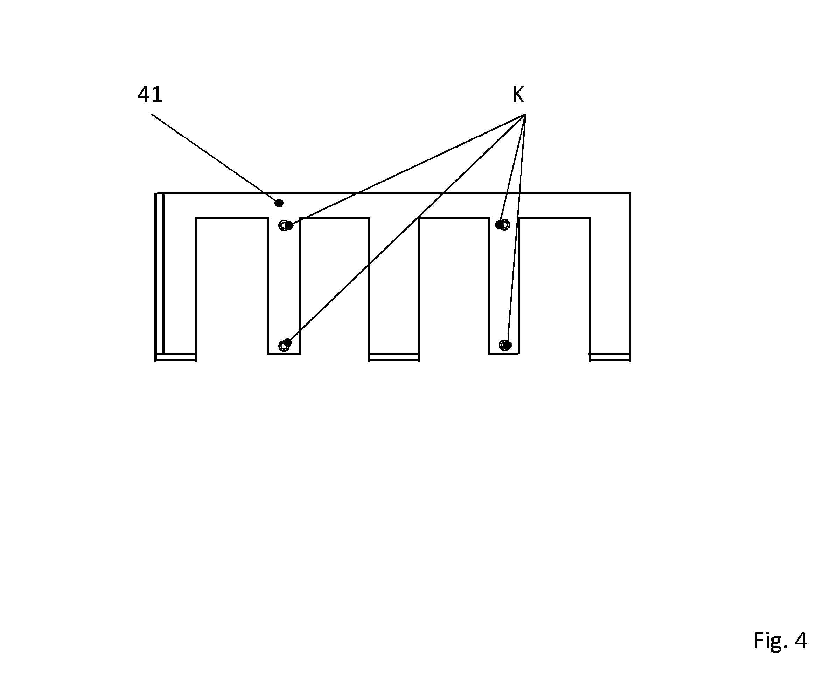

In Fig. 4 wird ein Hilfsrahmen 41 dargestellt, dieser kann metallisch, oder vorzugsweise aus Kunststoff hergestellt sein. Der Hilfsrahmen weist zumindest eine Verschraubung K auf, welche mit einem Zellhalter 32 verbindbar ist.

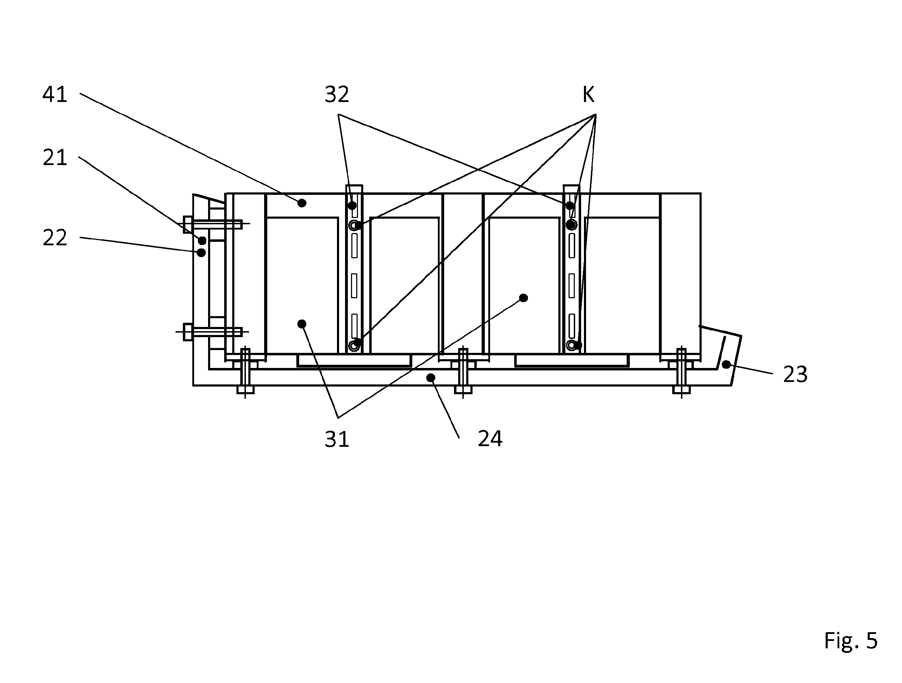

In Fig. 5 wird der Hilfsrahmen 41 in dem ersten Gehäusebauteil 21 angeordnet, dargestellt. Die Verbindung des Hilfsrahmens 41 mit dem ersten Gehäusebauteil 21 erfolgt in diesem Beispiel durch eine Schraubverbindung mit der ersten Seitenwand 22 und der Grundfläche 24 des ersten Gehäusebauteils 21. Im Hilfsrahmen 41 können ein oder mehrere Zellhalter 32 angeordnet sein. Am Zellhalter 32 ist zumindest eine Zelle 31 angeordnet. Der Zellhalter 32 ist dabei über zumindest eine Verschraubung K mit dem Hilfsrahmen 41 verbindbar. Es ist jedoch auch jede andere dem Fachmann bekannte Möglichkeit zur Verbindung von zwei Bauteilen denkbar, beispielsweise eine Steckverbindung.
Der Zellhalter 32 kann, für eine sicherere Verbindung, zwei sich gegenüberliegende Hilfsrahmen 41 aufweisen, wobei die Hilfsrahmen 41 spiegelbildlich ausgeführt sind.

### Bezugszeichenliste

- 1: Batteriesystem
- 11: zweites Gehäusebauteil
- 21: erstes Gehäusebauteil
- 22: erste Seitenwand
- 23: zweite Seitenwand
- 24: Grundfläche
- 31: Zellen
- 32: Zellhalter
- 33: obere Halterung
- 34: Längssteg
- 35: Quersteg
- 36: untere Halterung
- 41: Hilfsrahmen

- L: rechter Winkel
- M: Schräge
- K: Verschraubung

## Patentansprüche

1. Batteriesystem (1) für ein Kraftfahrzeug, wobei das Batteriesystem (1) ein erstes Gehäusebauteil (21) und ein zweites Gehäusebauteil (11) umfasst, wobei des ersten Gehäusebauteil (21) eine erste Seitenwand (22) und eine der ersten Seitenwand (22) gegenüberliegende zweite Seitenwand (23) umfasst, und wobei das Batteriesystem (1) Zellen (31) beinhaltet, welche an einem oder mehreren Zellhaltern (32) innerhalb des ersten Gehäusebauteils (21) befestigbar sind, wobei der oder die Zellhalter (32) an der Grundfläche (24) und der ersten Seitenwand (22) befestigbar ist, oder der oder die Zellhalter (32) mit einem Hilfsrahmen verbindbar ist, wobei der Hilfsrahmen an der Grundfläche (24) und der ersten Seitenwand (22) befestigbar ist,
wobei die erste Seitenwand (22) des ersten Gehäusebauteils (21) gegenüber einer Grundfläche (24) des ersten Gehäusebauteils (21) höher ausgeführt ist als eine der ersten Seitenwand (22) gegenüberliegende zweite Seitenwand (23), wobei die erste Seitenwand (22) und die Grundfläche (24) des ersten Gehäusebauteils einen im Wesentlichen rechten Winkel (L) bilden **dadurch gekennzeichnet, dass** die zweite Seitenwand (23) eine Schräge (M) aufweist, sodass die zweite Seitenwand und die Grundfläche einen Winkel größer als 90° einschließen.

2. Batteriesystem (1) für ein Kraftfahrzeug nach Anspruch 1, **dadurch gekennzeichnet, dass** die Schräge M einen Winkel zwischen der zweiten Seitenwand (23) und der Grundfläche (24) zwischen 95° und 105° aufweist.

3. Batteriesystem für ein Kraftfahrzeug nach Anspruch 1, **dadurch gekennzeichnet, dass** das erste Gehäusebauteil im Gussverfahren herstellbar ist.

4. Batteriesystem für ein Kraftfahrzeug nach Anspruch 1, **dadurch gekennzeichnet, dass** das zweite Gehäusebauteil als Tiefziehteil ausgeführt ist.

5. Batteriesystem für ein Kraftfahrzeug nach Anspruch 1, **dadurch gekennzeichnet, dass** zumindest ein Gehäusebauteil aus einem metallischen Werkstoff hergestellt sind.

6. Batteriesystem für ein Kraftfahrzeug nach Anspruch 1, **dadurch gekennzeichnet, dass** zumindest ein Gehäusebauteil aus Kunststoff hergestellt ist.

7. Batteriesystem für ein Kraftfahrzeug nach Anspruch 1, **dadurch gekennzeichnet, dass** die beiden Gehäusebauteile miteinander verbindbar sind.

8. Batteriesystem für ein Kraftfahrzeug nach Anspruch 7, **dadurch gekennzeichnet, dass** die Gehäusebauteile zur Aufnahme von zumindest einer Zelle ausgebildet sind.

## Claims

1. A battery system (1) for a motor vehicle, wherein the battery system (1) comprises a first housing component (21) and a second housing component (11), wherein the first housing component (21) comprises a first side wall (22) and a second side wall (23) located opposite the first side wall (22), and wherein the battery system (1) contains cells (31) which can be fastened to one or more cell holders (32) within the first housing component (21), wherein the cell holder or holders (32) can be fastened to the base surface (24) and the first side wall (22), or the cell holder or holders (32) can be connected to a subframe, wherein the subframe can be fastened to the base surface (24) and first side wall (22),
wherein
the first side wall (22) of the first housing component (21) is designed to be higher with respect to a base surface (24) of the first housing component (21) than a second side wall (23) located opposite the first side wall (22), wherein the first side wall (22) and the base surface (24) of the first housing component form a substantially right angle (L), **characterised in that** the second side wall (23) has an incline (M), so that the second side wall and the base surface enclose an angle greater than 90°.

2. A battery system (1) for a motor vehicle according to Claim 1, **characterised in that** the incline M has an angle between the second side wall (23) and the base surface (24) of between 95° and 105°.

3. A battery system for a motor vehicle according to Claim 1, **characterised in that** the first housing component can be produced in a casting process.

4. A battery system for a motor vehicle according to Claim 1, **characterised in that** the second housing component is designed as a deep-drawn part.

5. A battery system for a motor vehicle according to Claim 1, **characterised in that** at least one housing component are [sic] produced from a metallic material.

6. A battery system for a motor vehicle according to Claim 1, **characterised in that** at least one housing component is produced from plastics material.

7. A battery system for a motor vehicle according to Claim 1, **characterised in that** the two housing components can be connected together.

8. A battery system for a motor vehicle according to Claim 7, **characterised in that** the housing components are configured to receive at least one cell.

## Revendications

1. Système de batterie (1) pour un véhicule automobile, le système de batterie (1) comprenant un premier composant de boîtier (21) et un deuxième composant de boîtier (11), le premier composant de boîtier (21) comprenant une première paroi latérale (22) et une deuxième paroi latérale (23) opposée à la première paroi latérale (22), et le système de batterie (1) contenant des cellules (31), lesquelles peuvent être fixées sur un ou plusieurs porte-cellules (32) à l'intérieur du premier composant de boîtier (21), le ou les porte-cellules (32) pouvant être fixés sur la surface de base (24) et la première paroi latérale (22), ou le ou les porte-cellules (32) pouvant être reliées à un faux-châssis, le faux-châssis pouvant être fixé sur la surface de base (24) et la première paroi latérale (22),
la première paroi latérale (22) du premier composant de boîtier (21) étant plus élevée par rapport à une surface de base (24) du premier composant de boîtier (21) qu'une deuxième paroi latérale (23) opposée à la première paroi latérale (22), la première paroi latérale (22) et la surface de base (24) du premier composant de boîtier formant un angle (L) sensiblement droit, **caractérisé en ce que** la deuxième paroi latérale (23) présente un chanfrein (M), de sorte que la deuxième paroi latérale et la surface de base forment un angle supérieur à 90°.

2. Système de batterie (1) pour un véhicule automobile selon la revendication 1,
**caractérisé en ce que** le chanfrein M présente un angle entre la deuxième paroi latérale (23) et la surface de base (24) compris entre 95° et 105°.

3. Système de batterie pour un véhicule automobile selon la revendication 1,
**caractérisé en ce que** le premier composant de batterie peut être fabriqué au cours d'un procédé de moulage.

4. Système de batterie pour un véhicule automobile selon la revendication 1,
**caractérisé en ce que** le deuxième composant de boîtier est réalisé sous la forme d'une pièce emboutie.

5. Système de batterie pour un véhicule automobile selon la revendication 1,
**caractérisé en ce qu'**au moins un composant de boîtier est fabriqué à partir d'un matériau métallique.

6. Système de batterie pour un véhicule automobile selon la revendication 1,
**caractérisé en ce qu'**au moins un composant de boîtier est fabriqué à partir d'une matière plastique.

7. Système de batterie pour un véhicule automobile selon la revendication 1,
**caractérisé en ce que** les deux composants de boîtier peuvent être reliés l'un à l'autre.

8. Système de batterie pour un véhicule automobile selon la revendication 7,
**caractérisé en ce que** les composants de boîtier sont conçus pour loger au moins une cellule.
